# EUROPÄISCHE PATENTSCHRIFT

(11) **EP 1 466 789 B1**
(45) Veröffentlichungstag und Bekanntmachung des Hinweises auf die Patenterteilung: **08.03.2006**
(21) Anmeldenummer: 03008473.5
(22) Anmeldetag: 11.04.2003
(51) Int. Cl.: B60R 16/02, B60R 25/00, B60R 16/00

(54) **Fernbedienungssystem**
Remote Control System
Système de commande à distance

(43) Veröffentlichungstag der Anmeldung: 13.10.2004
(73) Patentinhaber: Delphi Technologies, Inc., Troy, MI 48007 (US)
(72) Erfinder: Krause, Roland, 51766 Engelskirchen (DE); Vollmer, Otmar M., 51766 Engelskirchen (DE)
(74) Vertreter: Manitz, Finsterwald & Partner GbR

(56) Entgegenhaltungen:
- EP-A- 1 113 405
- DE-A- 10 026 278
- DE-A- 19 710 476
- DE-A- 19 827 586

## Beschreibung

Die Erfindung betrifft ein Fernbedienungssystem insbesondere für Fahrzeuge, mit wenigstens einem einer tragbaren Bedienungseinrichtung zugeordneten Sender zum Aussenden von Funksignalen und wenigstens einem insbesondere einem Fahrzeug zugeordneten Empfänger für den Empfang dieser Funksignale, wobei über die Bedienungseinrichtung Befehlssignale für Befehle unterschiedlicher Art vorgebbar und ein jeweiliger Befehl nach Empfang des betreffenden Befehlssignals über eine dem Empfänger zugeordnete Steuer- und/oder Auswerteeinheit ausführbar ist.

Es sind bereits Chipkartenssysteme für einen schlüssellosen Zugang (keyless entry) bekannt, bei denen mittels der den Schlüssel ersetzenden Chipkarte beispielsweise die Türen und der Kofferraum des betreffenden Kraftfahrzeugs geöffnet und dessen Motor gestartet werden können. Dabei können beispielsweise zwischen einem im Kraftfahrzeug integrierten, einen Sender sowie einen Empfänger umfassenden Transceiver und der Chipkarte Sende- und Antwortsignale gewechselt werden. Bevor eine jeweilige Funktion ausgeführt werden kann, wird der von der Chipkarte übermittelte Identifikationscode geprüft.

Wird nun beispielsweise ein automatisches Verdeck eines Cabrios mittels einer solchen Fernbedienung betätigt, so kann aufgrund der bisherigen relativ großen Systemreichweite für alle Befehle der Fall eintreten, dass eine jeweilige die Bedienungseinrichtung nutzende Person nicht sehen kann, ob sich Personen in der Nähe des sich bewegenden Verdecks befinden oder nicht, so dass gegebenenfalls eine Verletzungsgefahr besteht. Es wäre daher wünschenswert, die Systemreichweite auf eine so kurze Distanz zu reduzieren, dass die jeweilige Bedienungsperson das Kraftfahrzeug stets gut einsehen kann. Andererseits wäre eine kurze Systemreichweite z.B. für solche Fälle, in denen das Fahrzeug verriegelt oder entriegelt werden soll, unzweckmäßig. In solchen Fällen ist eine größere Systemreichweite wünschenswert.

Aus der DE 100 26 278 A1 ist bereits ein Fernbedienungssystem gemäß dem Oberbegriff von Anspruch 1 für Fahrzeuge bekannt, bei dem die Ausführung von Befehlen vom Abstand zwischen dem Fahrzeug und der tragbaren Bedienungseinrichtung abhängig ist. Dabei werden jedoch zwei unterschiedliche Systeme, nämlich ein HF-System und ein IR-System eingesetzt, wobei die Reichweite des Infrarot (IR)-Systems kürzer als die Reichweite des HF-Systems gewählt ist. Bestimmte Befehle wie beispielsweise solche zum Fensterschließen werden nur ausgeführt, wenn ein entsprechendes Sendesignal über das Kurzdistanz-IR-System empfangen wurde. Die Reichweiten des HF-Systems und des IR-Systems sind jeweils festgelegt.

Auch in der DE 197 10 476 A1 ist wieder ein System zum selektiven und globalen Öffnen von Kraftfahrzeugen über eine funk- bzw. infrarotgesteuerte Fernbedienung beschrieben, bei dem die jeweilige Systemreichweite festgelegt ist.

Bei einer aus der DE 198 27 586 A1 bekannten schlüssellosen Zugangskontrolleinrichtung für Kraftfahrzeuge wird die tragbare Bedienungseinrichtung über ein vom Fahrzeug ausgesandtes Kurzdistanz-NF-Signal aktiviert. Die weitere Kommunikation einschließlich der Benutzeridentifikation erfolgt dann über einen HF-Übertragungspfad.

Bei einem aus der EP 1 113 405 A2 bekannten Fernbedienungssystem für Fahrzeuge wird ein Befehlsinterface eingesetzt, das den betreffenden Benutzer über Fingerabdrücke identifiziert. Entsprechende Befehle können umgesetzt werden, sobald festgestellt wurde, dass die erfassten Fingerabdrücke mit zuvor gespeicherten Mustern übereinstimmen.

Der Erfindung liegt die Aufgabe zugrunde, ein verbessertes Fernbedienungssystem der eingangs genannten Art zu schaffen, das auf einfache und wirtschaftliche Weise den zuvor genannten unterschiedlichen Anforderungen gerecht wird.

Diese Aufgabe wird nach der Erfindung dadurch gelöst, dass die Systemreichweite in Abhängigkeit von der Art eines jeweiligen Befehls variabel einstellbar ist. Dabei erfolgt eine jeweilige Umstellung bevorzugt automatisch.

Aufgrund dieser Ausbildung kann also zwischen Befehlen für unkritische Funktionen, wie z.B. einem Verriegelungs- oder Entriegelungsbefehl und Befehlen für kritische Funktionen unterschieden werden, zu denen beispielsweise die Betätigung eines Verdecks eines Cabrios oder die Betätigungen anderer Einrichtungen zählt, die eine Verletzungsgefahr für sich nahe am Fahrzeug aufhaltende Personen mit sich bringen kann. Unkritische Funktionen können über die entsprechenden Befehle also auch aus größeren Entfernungen ausgelöst werden, während Befehle für kritische Funktionen nur aus kürzeren Entfernungen umgesetzt werden, womit sichergestellt ist, dass die jeweilige Bedienungsperson das Kraftfahrzeug einsehen kann, so dass gegebenenfalls Personen, die einer Verletzungsgefahr ausgesetzt sein könnten, auch erkannt werden können.

Dabei sind die Befehle also in zumindest zwei Kategorien unterteilt, wobei die einer ersten Kategorie zugeordneten Befehle auch noch bei relativ größeren gegenseitigen Abständen zwischen Sender und Empfänger ausgeführt werden dürften, während die der zweiten Kategorie zugeordneten Befehle nur bei relativ kleineren gegenseitigen Abständen zwischen Sender und Empfänger ausgeführt werden dürfen. Dabei kann zumindest ein der zweiten Kategorie zugeordneter Befehl beispielsweise der Fernbedienung eines automatischen Verdecks eines Cabrios dienen. Zumindest ein der ersten Kategorie zugeordneter Befehl kann beispielsweise der Fernbedienung einer Türverriegelung, z.B. einer Kraftfahrzeug-Türverriegelung, dienen.

Bei einer bevorzugten Ausführungsform des erfindungsgemäßen Fernbedienungssystems umfasst eine der Bedienungseinrichtung zugeordnete Steuer- und/oder Auswerteeinheit und/oder eine dem Empfänger zugeordnete bzw. auf der Seite des Fahrzeuges vorgesehene Steuer- und/oder Auswerteinheit Mittel zur Erkennung der jeweiligen Befehlsart. Dabei ist die Systemreichweite vorzugsweise durch die der Bedienungseinrichtung zugeordnete Steuer- und/oder Auswerteeinheit und/oder durch die dem Empfänger zugeordnete Steuer- und/oder Auswerteeinheit entsprechend der jeweiligen Befehlsart variabel einstellbar.

Über die betreffenden Mittel kann also die Art des Befehls, den die Bedienungsperson umgesetzt haben möchte, erkannt werden, woraufhin die Systemreichweite entsprechend variabel eingestellt wird.

Die Systemreichweite ist insbesondere über die Reichweite des Senders und/oder die Empfindlichkeit des Empfängers variabel einstellbar.

Dabei kann die Reichweite des Senders insbesondere über dessen Sendeleistung und/oder über den Antennenstrom variabel einstellbar sein.

Die unterschiedlichen Befehle bzw. Befehlssignale sind beispielsweise über ein entsprechendes Bedienfeld der Bedienungseinrichtung vorgebbar.

Bei einer zweckmäßigen praktischen Ausführungsform des erfindungsgemäßen Fernbedienungssystems können die unterschiedlichen Befehle bzw. Befehlssignale über zumindest einen Aktuator wie insbesondere einen Bedienknopf und/oder dergleichen vorgegeben werden.

Dabei kann den unterschiedlichen Befehlen bzw. Befehlssignalen beispielsweise zumindest teilweise jeweils ein eigener Aktuator zugeordnet sein. Grundsätzlich ist es beispielsweise jedoch auch denkbar, dass mehreren unterschiedlichen Befehlen bzw. Befehlssignalen ein gemeinsamer Aktuator zugeordnet ist und eine Unterscheidung zwischen den verschiedenen Befehlen bzw. Befehlssignalen durch eine unterschiedliche Betätigung des Aktuators erfolgt.

Ist mehreren unterschiedlichen Befehlen bzw. Befehlssignalen ein gemeinsamer Aktuator zugeordnet, so kann die Unterscheidung zwischen den verschiedenen Befehlen bzw. Befehlssignalen beispielsweise durch eine unterschiedliche Dauer der Betätigung des Aktuators erfolgen.

Es ist beispielsweise auch eine solche Ausführung des erfindungsgemäßen Fernbedienungssystem möglich, bei der unterschiedlichen Befehlen unterschiedliche Codes zugeordnet werden, die dann jeweils ausgesendet werden können.

Durch eine Logik bzw. Steuer- und/oder Auswerteinheit kann dann jeweils entschieden werden, welche Systemreichweite für einen ausgegebenen Befehl zugelassen wird.

Grundsätzlich kann auch dem Fahrzeug wenigstens ein Sender und auch der tragbaren Bedienungseinrichtung wenigstens ein Empfänger zugeordnet sein. Dabei kann die Systemreichweite zumindest teilweise auch über die Reichweite des dem Fahrzeug zugeordneten Senders variable einstellbar sein.

Das Fernbedienungssystem kann beispielsweise einen der tragbaren Bedienungseinrichtungen zugeordneten ersten Transceiver zur Kommunikation mit einem dem Fahrzeug zugeordneten zweiten Transceiver über eine bidirektionale Funkstrecke umfassen.

Das Fernbedienungssystem kann insbesondere Teil eines schlüssellosen Zugangssystems sein. Dabei kann die tragbare Bedienungseinrichtung insbesondere auch der Benutzeridentifikation dienende Mittel umfassen.

Grundsätzlich sind jedoch auch beliebige andere Ausführungsformen des erfindungsgemäßen Fernbedienungssystems denkbar.

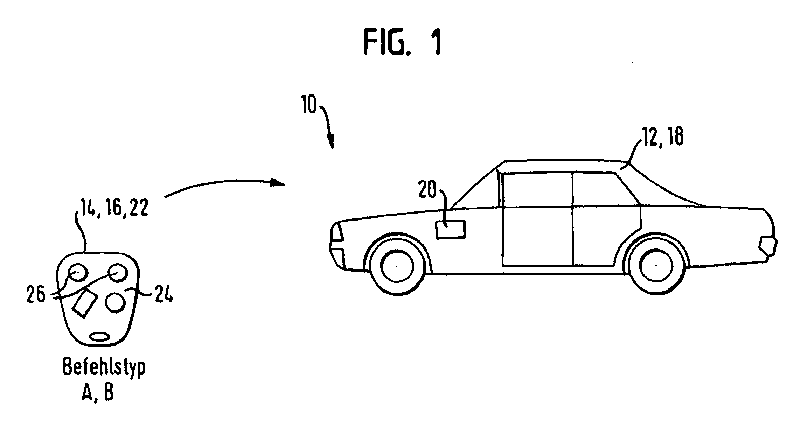

Die Erfindung wird im folgenden anhand eines Ausführungsbeispiels unter Bezugnahme auf die Zeichnung näher erläutert.

Die einzige Figur der Zeichnung zeigt in rein schematischer Darstellung ein Fernbedienungssystem 10 für ein Kraftfahrzeug 12.

Dieses Fernbedienungssystem 10 umfasst wenigstens einen einer tragbaren Bedienungseinrichtung 14 zugeordneten Sender 16 zum Aussenden von Funksignalen und wenigstens einen dem Fahrzeug 12 zugeordneten Empfänger 18 für den Empfang dieser Funksignale.

Über die Bedienungseinrichtung 14 sind Befehlssignale für Befehle unterschiedlicher Art vorgebbar. Bei hinreichender, von der jeweiligen Befehlsart abhängiger Systemreichweite wird ein jeweiliger über die Bedienungseinrichtung 14 ausgegebener Befehl vom dem Fahrzeug 12 zugeordneten Empfänger 18 empfangen, woraufhin er über eine dem Kraftfahrzeug 12 zugeordnete Steuer- und/oder Auswerteeinheit 20 entsprechend ausgeführt werden kann. Voraussetzung für die Ausführung kritischer Befehle ist, dass die Bedienungseinrichtung 14, über die ein jeweiliger kritischer Befehl angegeben wird, sich hinreichend nahe am Kraftfahrzeug 12 befindet.

Alternativ oder zusätzlich kann auch der Bedienungseinrichtung 14 eine Steuer- und/oder Auswerteeinheit 22 zugeordnet sein.

Die Systemreichweite ist in Abhängigkeit von der Art eines jeweiligen Befehls variabel einstellbar. Dabei kann die dem Kraftfahrzeug 12 zugeordnete Steuer- und/oder Auswerteeinheit 20 und/oder eine der Bedienungseinrichtung 14 zugeordnete Steuer- und/oder Auswerteeinheit 22 Mittel zur Erkennung der jeweiligen Befehlsart umfassen. Die Systemreichweite kann dann durch die dem Kraftfahrzeug 12 bzw. die der Bedienungseinrichtung 14 zugeordnete Steuer- und/oder Auswerteeinheit 20 bzw. 22 entsprechend der jeweiligen Befehlsart variabel eingestellt werden. Die Systemreichweite kann beispielsweise über die Reichweite des der Bedienungseinrichtung 14 zugeordneten Senders 16 und/oder die Empfindlichkeit des fahrzeugseitigen Empfängers 18 variabel einstellbar sein.

Die Reichweite des Senders 16 ist beispielsweise über dessen Sendleistung oder über den Antennenstrom variabel einstellbar. Es können in Abhängigkeit von der Befehlsart beispielsweise auch unterschiedliche Antennen angesteuert werden.

Die unterschiedlichen Befehle bzw. Befehlsignale sind über ein Bedienfeld 24 der Bedienungseinrichtung 14 vorgebbar. Dabei können die unterschiedlichen Befehle bzw. Befehlsignale z.B. über zumindest einen Aktuator 26 wie insbesondere einen Bedienknopf und/oder dergleichen vorgegeben werden.

Den unterschiedlichen Befehlen bzw. Befehlsignalen kann zumindest teilweise jeweils ein eigener Aktuator 26 zugeordnet sein. Dabei können den unterschiedlichen Befehlen beispielsweise unterschiedliche Codes zugeordnet werden, die dann jeweils durch den Sender 16 ausgesendet werden.

Grundsätzlich kann auch mehreren unterschiedlichen Befehlen bzw. Befehlsignalen ein gemeinsamer Aktuator 26 zugeordnet sein und eine Unterscheidung zwischen den verschiedenen Befehlen bzw. Befehlsignalen durch eine unterschiedliche Betätigung des Aktuators 26 erfolgen. Eine Unterscheidung zwischen den verschiedenen Befehlen bzw. Befehlsignalen kann dann beispielsweise durch eine unterschiedliche Dauer der Betätigung des Aktuators 26 erfolgen.

Durch eine Logik des Fernbedienungssystems 10 bzw. eine Steuer- und/oder Auswerteeinheit 20, 22 kann dann entschieden werden, welche Systemreichweite für einen jeweiligen ausgegebenen Befehl zugelassen wird.

Die Befehle können insbesondere in zumindest zwei Kategorien A, B unterteilt sein. Dabei ist die Ausführung der einer ersten Kategorie A zugeordneten Befehle auch noch bei relativ größeren gegenseitigen Abständen zwischen Sender 16 und Empfänger 18 zugelassen. Dagegen dürfen die der zweiten Kategorie B zugeordneten Befehle nur bei relativ kleineren gegenseitigen Abständen zwischen Sender 16 und Empfänger 18 ausgeführt werden.

Zumindest ein der zweiten Kategorie B zugeordneter Befehl kann beispielsweise der Fernbedienung eines automatischen Verdecks eines Cabrios dienen. Ein solcher Befehl wird also nur dann umgesetzt oder ausgeführt, wenn die jeweilige Bedienungsperson bei der Aktivierung des betreffenden Befehls über die Bedienungseinrichtung 14 sich hinreichend nahe am Kraftfahrzeug 12 befindet, so dass sie dieses gut einsehen kann. Die Gefahr einer Verletzung von sich im Bereich des Fahrzeugs 12 aufhaltenden Personen durch das sich bewegende Verdeck ist damit deutlich verringert.

Zumindest ein der ersten Kategorie A zugeordneter Befehl kann beispielsweise der Fernbedienung einer Türverriegelung oder dergleichen dienen. Die Zentralverriegelung eines jeweiligen Kraftfahrzeuges kann also auch aus größerer Entfernung betätigt werden, da in diesem Fall die Gefahr einer Verletzung von Personen nicht gegeben ist. Auch andere entsprechend unkritische Funktionen können dieser ersten Kategorie A von Befehlen zugeordnet sein, die auch aus größeren Entfernungen akzeptiert werden.

Grundsätzlich kann auch dem Kraftfahrzeug 12 wenigstens ein Sender und auch der tragbaren Bedienungseinrichtung 14 wenigstens ein Empfänger zugeordnet sein. In diesem Fall ist es beispielsweise auch denkbar, dass die Systemreichweite zumindest über die Reichweite des dem Kraftfahrzeug 12 zugeordneten Senders variabel einstellbar ist.

Grundsätzlich ist beispielsweise auch eine Ausführung mit einem der tragbaren Bedienungseinrichtung 14 zugeordneten ersten Transceiver zur Kommunikation mit einem dem Kraftfahrzeug 12 zugeordneten zweiten Transceiver über eine bidirektionale Funkstrecke denkbar.

Das Fernbedienungssystem 10 kann insbesondere Teil eines schlüssellosen Zugangssystems sein. Dabei kann die tragbare Bedienungseinrichtung 14 insbesondere auch der Benutzeridentifikation dienende Mittel umfassen.

### Bezugszeichenliste

- 10: Fernbedienungssystem
- 12: Kraftfahrzeug
- 14: tragbare Bedienungseinrichtung
- 16: Sender
- 18: Empfänger
- 20: Steuer- und/oder Auswerteeinheit
- 22: Steuer- und/oder Auswerteeinheit
- 24: Bedienfeld
- 26: Aktuator

- A: Befehlskategorie
- B: Befehlskategorie

## Patentansprüche

1. Fernbedienungssystem (10) insbesondere für Fahrzeuge (12), mit wenigstens einem einer tragbaren Bedienungseinrichtung (14) zugeordneten Sender (16) zum Aussenden von Funksignalen und wenigstens einem insbesondere einem Fahrzeug (12) zugeordneten Empfänger (18) für den Empfang dieser Funksignale, wobei über die Bedienungseinrichtung (14) Befehlssignale für Befehle unterschiedlicher Art vorgebbar und ein jeweiliger Befehl nach Empfang des betreffenden Befehlssignals über eine dem Empfänger (18) zugeordnete Steuer- und/oder Auswerteeinheit (20) ausführbar ist,
**dadurch gekennzeichnet,**
**dass** die Reichweite des auf dem Austansch von Funksignalen Gasierenden Systems in Abhängigkeit von der Art eines jeweiligen Befehls variabel einstellbar ist, und dass die Befehle in zumindest zwei Kategorien (A, B) unterteilt sind, wobei die einer ersten Kategorie (A) zugeordneten Befehle auch noch bei relativ größeren gegenseitigen Abständen zwischen Sender (16) und Empfänger (18) ausgeführt werden dürfen, während die der zweiten Kategorie (B) zugeordneten Befehle nur bei relativ kleineren gegenseitigen Abständen zwischen Sender (16) und Empfänger (18) ausgeführt werden dürfen.

2. Fernbedienungssystem nach Anspruch 1,
**dadurch gekennzeichnet,**
**dass** eine der Bedienungseinrichtung zugeordnete Steuer- und/oder Auswerteeinheit (22) und/oder eine dem Empfänger (18) zugeordnete Steuer- und/oder Auswerteeinheit (20) Mittel zur Erkennung der jeweiligen Befehlsart umfasst.

3. Fernbedienungssystem nach Anspruch 2,
**dadurch gekennzeichnet,**
**dass** die Systemreichweite durch die der Bedienungseinrichtung (14) zugeordnete Steuer- und/oder Auswerteeinheit (22) und/oder durch die dem Empfänger (18) zugeordnete Steuer- und/oder Auswerteeinheit (20) entsprechend der jeweiligen Befehlsart variabel einstellbar ist.

4. Fernbedienungssystem nach einem der vorhergehenden Ansprüche,
**dadurch gekennzeichnet,**
**dass** die Systemreichweite über die Reichweite des Senders (16) und/oder die Empfindlichkeit des Empfängers (18) variabel einstellbar ist.

5. Fernbedienungssystem nach Anspruch 4,
**dadurch gekennzeichnet,**
**dass** die Reichweite des Senders (16) über dessen Sendeleistung variabel einstellar ist.

6. Fernbedienuizgssystem nach Anspruch 4 oder 5,
**dadurch gekennzeichnet,**
**dass** die Reichweite des Senders (16) über den Antennenstrom variabel einstellar ist.

7. Fernbedienungssystem nach einem der vorhergehenden Ansprüche,
**dadurch gekennzeichnet,**
**dass** die unterschiedlichen Befehle bzw. Befehlssignale über ein Bedienfeld (24) der Bedienungseinrichtung (14) vorgebbar sind.

8. Fernbedienungssystem nach einem der vorhergehenden Ansprüche,
**dadurch gekennzeichnet,**
**dass** die unterschiedlichen Befehle bzw. Befehlssignale über zumindest einen Aktuator (26) wie insbesondere einen Bedienknopf und/oder dergleichen vorgebbar sind.

9. Fernbedienungssystem nach einem der vorhergehenden Ansprüche,
**dadurch gekennzeichnet,**
**dass** den unterschiedlichen Befehlen bzw. Befehlssignalen zumindest teilweise jeweils ein eigener Aktuator (26) zugeordnet ist.

10. Fernbedienungssystem nach einem der vorhergehenden Ansprüche,
**dadurch gekennzeichnet,**
**dass** mehreren unterschiedlichen Befehlen bzw. Befehlssignalen ein gemeinsamer Aktuator (26) zugeordnet ist und eine Unterscheidung zwischen den verschiedenen Befehlen bzw. Befehlssignalen durch eine unterschiedliche Betätigung des Aktuators (26) erfolgt.

11. Fernbedienungssystern nach Anspruch 10,
**dadurch gekennzeichnet,**
**dass** die Unterscheidung zwischen den verschiedenen Befehlen bzw. Befehlssignalen durch eine unterschiedliche Dauer der Betätigung des Aktuators (26) erfolgt.

12. Fernbedienungssystem nach einem der vorhergehenden Ansprüche,
**dadurch gekennzeichnet,**
**dass** unterschiedlichen Befehlen unterschiedliche Codes zugeordnet werden.

13. Fernbedienungssystem nach Anspruch 12,
**dadurch gekennzeichnet,**
**dass** die jeweiligen Codes gesendet werden.

14. Fernbedienungssystem nach einem der vorhergehenden Ansprüche,
**dadurch gekennzeichnet,**
**dass** durch eine Steuer- und/oder Auswerteeinheit (20, 22) entschieden wird, welche Systemreichweite für einen ausgegebenen Befehl zugelassen wird.

15. Fernbedienungssystem nach einem der vorhergehenden Ansprüche,
**dadurch gekennzeichnet,**
**dass** zumindest ein der zweiten Kategorie (B) zugeordneter Befehl der Fernbedienung eines automatischen Verdecks eines Cabrios dient.

16. Fernbedienungssystem nach einem der vorhergehenden Ansprüche,
**dadurch gekennzeichnet,**
**dass** zumindest ein der ersten Kategorie (A) zugeordneter Befehl der Fernbedienung einer Türverriegelung dient.

17. Fernbedienungssystem nach einem der vorhergehenden Ansprüche,
**dadurch gekennzeichnet,**
**dass** auch dem Fahrzeug (12) wenigstens ein Sender und auch der tragbaren Bedienungseinrichtung (14) wenigstens ein Empfänger zugeordnet ist.

18. Fernbedienungssystem nach Anspruch 17,
**dadurch gekennzeichnet,**
**dass** die Systemreichweite zumindest über die Reichweite des dem Fahrzeug (12) zugeordneten Senders variabel einstellbar ist.

19. Fernbedienungssystem nach einem der vorhergehenden Ansprüche,
**gekennzeichnet durch**
einen der tragbaren Bedienungseinrichtung (14) zugeordneten ersten Transceiver zur Kommunikation mit einem dem Fahrzeug (12) zugeordneten zweiten Transceiver über eine bidirektionale Funkstrecke.

20. Fernbedienungssystem nach einem der vorhergehenden Ansprüche,
**dadurch gekennzeichnet,**
**dass** es Teil eines schlüssellosen Zugangssystems ist.

21. Fernbedieriungssystem nach einem der vorhergehenden Ansprüche,
**dadurch gekennzeichnet,**
**dass** die tragbare Bedienungseinrichtung der Benutzeridentifikation dienende Mittel umfasst.

## Claims

1. A remote control system (10), in particular for vehicles (12), comprising at least one transmitter (16) associated with a portable control device (14) for the transmission of radio signals and at least one receiver (18) associated in particular with a vehicle (12) for the reception of these radio signals, with command signals for commands of different types being able to be pre-set via the control device (14) and a respective command being able to be carried out via a control and/or evaluation unit (20) associated with the receiver (18) after reception of the relevant command signal,
**characterized in that** the range of the system based on the exchange of radio signals is variably adjustable in dependence on the type of a respective command; and **in that** the commands are divided into at least two categories (A, B), with the commands associated with a first category (A) also being able to be carried out at relatively larger mutual distances between the transmitter (16) and the receiver (18), whereas the commands associated with the second category (B) can only be carried out at relatively shorter mutual distances between the transmitter (16) and the receiver (18).

2. A remote control system in accordance with claim 1, **characterized in that** a control and/or evaluation unit (22) associated with the control device and/or a control and/or evaluation unit (20) associated with the receiver (18) includes means for the recognition of the respective command type.

3. A remote control system in accordance with claim 2, **characterized in that** the system range is variably adjustable in accordance with the respective command type by the control and/or evaluation unit (22) associated with the control device (14) and/or by the control and/or evaluation unit (20) associated with the receiver (18).

4. A remote control system in accordance with any one of the preceding claims, **characterized in that** the system range is variably adjustable via the range of the transmitter (16) and/or via the sensitivity of the receiver (18).

5. A remote control system in accordance with claim 4, **characterized in that** the range of the transmitter (16) is variably adjustable via its transmission power.

6. A remote control system in accordance with claim 4 or claim 5,
**characterized in that** the range of the transmitter (16) is variably adjustable via its antenna power.

7. A remote control system in accordance with any one of the preceding claims, **characterized in that** the different commands or command signals are pre-determinable via a control panel (24) of the control device (14).

8. A remote control system in accordance with any one of the preceding claims, **characterized in that** the different commands or command signals are pre-determinable via at least one actuator (26) such as in particular a control knob and/or the like.

9. A remote control system in accordance with any one of the preceding claims, **characterized in that** a separate actuator (26) is respectively associated with at least some of the different commands or command signals.

10. A remote control system in accordance with any one of the preceding claims, **characterized in that** a common actuator (26) is associated with a plurality of different commands or command signals and a distinguishing between the different commands or command signals takes place by a different actuation of the actuator (26).

11. A remote control system in accordance with claim 10, **characterized in that** the distinguishing between the different commands or command signals takes place by a different duration of actuation of the actuator (26).

12. A remote control system in accordance with any one of the preceding claims, **characterized in that** different codes are associated with different commands.

13. A remote control system in accordance with claim 12, **characterized in that** the respective codes are transmitted.

14. A remote control system in accordance with any one of the preceding claims, **characterized in that** a decision is made by a control and/or evaluation unit (20, 22) as to which system range is permitted for an output command.

15. A remote control system in accordance with any one of the preceding claims, **characterized in that** at least one command associated with the second category (B) serves for the remote control of an automatic top of a convertible.

16. A remote control system in accordance with any one of the preceding claims, **characterized in that** at least one command associated with the first category (A) serves for the remote control of a door lock.

17. A remote control system in accordance with any one of the preceding claims, **characterized in that** at least one transmitter is also associated with the vehicle (12) and at least one receiver is also associated with the portable control device (14).

18. A remote control system in accordance with claim 17, **characterized in that** the system range is variably adjustable at least via the range of the transmitter associated with the vehicle (12).

19. A remote control system in accordance with any one of the preceding claims, **characterized by** a first transceiver associated with the portable operating device (14) for the communication via a bidirectional radio path with a second transceiver associated with the vehicle (12).

20. A remote control system in accordance with any one of the preceding claims, **characterized in that** it is part of a keyless entry system.

21. A remote control system in accordance with any one of the preceding claims, **characterized in that** the portable control device includes means serving for the user identification.

## Revendications

1. Système de télécommande (10) notamment pour véhicules (12) comportant au moins un émetteur (16), qui est associé à un dispositif d'actionnement portable (14) et sert à émettre des signaux radio et au moins un récepteur (18) associé notamment à un véhicule (12) et servant à recevoir ces signaux radio,
et dans lequel des signaux d'instruction peuvent être déterminés par l'intermédiaire du dispositif d'actionnement (14) pour des instructions de différents types, et une instruction respective peut être exécutée après la réception du signal d'instructions considéré, par l'intermédiaire d'une unité de commande et/ou d'évaluation (20) associé au récepteur (18), **caractérisé en ce que** la portée du système basé sur l'échange de signaux radio est réglable d'une manière variable en fonction du type d'une instruction respective et que les instructions sont réparties dans au moins deux catégories (A, B), des instructions associées à une première catégorie (A) devant être exécutées encore également dans le cas de distances réciproques relativement importantes entre l'émetteur (17) et le récepteur (18), alors que les instructions associées à la seconde catégorie (B) doivent être exécutées uniquement dans le cas de distances réciproques relativement plus faibles entre l'émetteur (16) et le récepteur (18).

2. Système de télécommande selon la revendication 1, **caractérisé en ce qu'**une unité de commande et/ou d'évaluation (22) associée au dispositif d'actionnement et/ou une unité de commande et/ou d'évaluation (20) associée au récepteur (18) comprend des moyens pour identifier le type d'instructions respectif.

3. Système de télécommande selon la revendication 2, **caractérisé en ce que** la portée du système est réglable d'une manière variable, en fonction du type d'instruction respectif, par l'unité de commande et/ou d'évaluation (22) associée au dispositif d'actionnement (14) et/ou au moyen de l'unité de commande et/ou d'évaluation (20) associée au récepteur (18).

4. Système de télécommande selon l'une des revendications précédentes, **caractérisé en ce que** la portée du système est réglable d'une manière variable en fonction de la portée de l'émetteur (16) et/ou de la sensibilité du récepteur (18).

5. Système de télécommande selon la revendication 4, **caractérisé en ce que** la portée de l'émetteur (16) est réglable de façon variable en fonction de sa puissance d'émission.

6. Système de télécommande selon la revendication 4 ou 5, **caractérisé en ce que** la portée de l'émetteur (16) est réglable de façon variable au moyen du courant d'antenne.

7. Système de télécommande selon l'une des revendications précédentes, **caractérisé en ce que** les différentes instructions ou les différents signaux d'instruction peuvent être prédéterminés par l'intermédiaire d'un panneau de commande (24) du dispositif d'actionnement (14).

8. Système de télécommande selon l'une des revendications précédentes, **caractérisé en ce que** les différentes instructions ou les différents signaux d'instruction peuvent être prédéterminés par l'intermédiaire d'au moins un actionneur (26), comme notamment un bouton de commande et/ou analogue.

9. Système de télécommande selon l'une des revendications précédentes, **caractérisé en ce que** respectivement un actionneur particulier (26) est associé au moins en partie aux différentes instructions ou aux différents signaux d'instruction.

10. Système de télécommande selon l'une des revendications précédentes, **caractérisé en ce qu'**un actionneur commun (26) est associé à plusieurs instructions différentes ou à plusieurs signaux différents instructions et qu'une différenciation entre les différentes instructions ou les différents signaux d'instruction est réalisée au moyen d'un actionnement différent de l'actionneur (26).

11. Système de télécommande selon la revendication 10, **caractérisé en ce que** la différenciation entre les différentes instructions ou les différents signaux d'instruction s'effectue au moyen d'une durée différente de l'actionnement de l'actionneur (26).

12. Système de télécommande selon l'une des revendications précédentes, **caractérisé en ce que** différents codes sont associés à différentes instructions.

13. Système de télécommande selon la revendication 12, **caractérisé en ce que** les codes respectifs sont émis.

14. Système de télécommande selon l'une des revendications précédentes, **caractérisé en ce qu'**une unité de commande et/ou d'évaluation (20, 22) permet de décider quelle portée du système est autorisée pour une instruction délivrée.

15. Système de télécommande selon les revendications précédentes, **caractérisé en ce que** au moins une instruction, qui est associée à la deuxième catégorie (B), sert à réaliser la télécommande d'une capote automatique d'un cabriolet.

16. Système de télécommande selon l'une des revendications précédentes, **caractérisé en ce qu'**au moins une instruction, associée à la première catégorie (A) est utilisée pour la télécommande d'un verrouillage de portière.

17. Système de télécommande selon l'une des revendications précédentes, **caractérisé en ce qu'**au moins un émetteur est associé également au véhicule (12) et **en ce qu'**au moins un récepteur est associé également au dispositif portable d'actionnement (14).

18. Système de commande selon la revendication 17, **caractérisé en ce que** la portée du système est réglable d'une manière variable au moins au moyen de la portée de l'émetteur associé au véhicule (12).

19. Système de télécommande selon l'une des revendications précédentes, **caractérisé par** un premier émetteur - récepteur, associé au dispositif de commande portable (14), pour établir la communication avec un second émetteur - récepteur associé au véhicule (12), par l'intermédiaire d'une section radio bidirectionnelle.

20. Système de télécommande selon l'une des revendications précédentes, **caractérisé en ce qu'**il fait partie d'un système d'accès sans clé.

21. Système de télécommande selon l'une des revendications précédentes, **caractérisé en ce que** le dispositif de télécommande portable comprend des moyens utilisés pour une identification de l'utilisateur.
